# EUROPÄISCHE PATENTSCHRIFT

(11) **EP 2 456 030 B1**
(45) Veröffentlichungstag und Bekanntmachung des Hinweises auf die Patenterteilung: **11.01.2017**
(21) Anmeldenummer: 11189692.4
(22) Anmeldetag: 18.11.2011
(51) Int. Cl.: H02G 3/06, H02G 3/08, F16L 37/00

(54) **Einseitig einsetzbare Kabelverschraubung**
One-sided cable bolting
Vissage de câble insérable sur un côté

(30) Priorität: 18.11.2010 DE 202010015530 U
(43) Veröffentlichungstag der Anmeldung: 23.05.2012
(73) Patentinhaber: Wiska Hoppmann & Mulsow GmbH, 24568 Kaltenkirchen (DE)
(72) Erfinder: Dohrendorf, Heino, 23845 Borstel (DE); Gehre, Peter, 24576 Bad Bramstedt (DE)
(74) Vertreter: Eisenführ Speiser

(56) Entgegenhaltungen:
- DE-A1- 10 357 646
- DE-A1-102005 017 690
- DE-C1- 4 128 632
- DE-C1- 19 812 079

## Beschreibung

Die Erfindung betrifft eine Kabelverschraubung zur Durchführung eines Kabels durch eine Bohrung in einer Gehäusewand und Fixierung des Kabels in Bezug auf die Gehäusewand, umfassend, eine Klemmhülse mit einem Klemmabschnitt mit einer vorzugsweise zylindrischen Innenfläche, die einen Hülseninnendurchmesser zur Halterung des Kabels aufweist, und einem Flanschabschnitt, der größer als ein auf die Bohrung bezogener Nenndurchmesser ist, ein Klemmelement, welches ausgebildet ist, um solcherart mit der Klemmhülse verbunden zu werden, dass hierdurch der Hülseninnendurchmesser aus einer ersten Durchmesserabmessung zumindest über Abschnitte des Umfanges der Innenfläche in eine zweite Durchmesserabmessung gebracht wird, die kleiner ist als die erste Durchmesserabmessung.

Kabelverschraubungen dieser Art werden dazu genutzt, um Kabel durch Gehäusewände, Bleche, Schottwände und dergleichen hindurchzuführen. Die Kabelverschraubungen dienen dabei dazu, dass die kabel einerseits keine Beschädigungen im Bereich der Kabeldurchführung erleiden, andererseits für eine zug- und druckfeste Befestigung des Kabels in Bezug auf die Wand, durch welches es hindurchgeführt wird. Weiterhin kann bei Kabelverschraubungen eine wasser- oder gasdichte Abdichtung zwischen Kabel und Wand mittels einer solchen Kabelverschraubung erzielt werden.

Kabelverschraubungen werden in der Regel so eingesetzt und montiert, dass in die Wand, durch welche das Kabel hindurchzuführen ist, eine Bohrung mit einem Nenndurchmesser eingebracht wird. Die Kabelverschraubung wird dann in solcher Weise auf das hindurchzuführende Kabel aufgefädelt, dass Klemmelement und Klemmhülse auf das Kabel aufgeschoben werden und hierauf folgend die Klemmhülse mitsamt dem Kabel von der Vorderseite aus durch die Bohrung in der Wand hindurchgeschoben wird. Hierauf folgend wird von der Rückseite aus ein Sicherungselement auf das Kabel aufgefädelt und mit der Klemmhülse verbunden, beispielsweise eine Haltemutter, die auf ein Außengewinde der Klemmhülse aufgeschraubt wird. Die Klemmhülse kann auch diese Weise fest in der Bohrung verankert werden. Durch hierauf folgendes Befestigen des Klemmelementes an der Klemmhülse auf der Vorderseite der Wand, beispielsweise durch Aufschrauben eines als Mutter ausgeführten Klemmelementes auf ein Außengewinde der Klemmhülse wird dann durch Zusammenwirken dieses Klemmelements mit einem sich konisch verjüngenden Abschnitt der Klemmhülse das Kabel kraftschlüssig in der Klemmhülse verankert.

Der Nenndurchmesser einer solchen Kabelverschraubung entspricht in der Regel der Bohrung, die in die Wand eingebracht werden muss, um die Kabelverschraubung darin zu verankern. Für einen solchen Nenndurchmesser können dann in der Regel mehrere unterschiedliche Kabelverschraubungen bereitgestellt sein, die ausgebildet sind, um Kabel unterschiedlichen Durchmessers in einer solchen Bohrung mit Nenndurchmesser zu verankern. Diese unterschiedlichen Kabelverschraubungen mit übereinstimmenden Nenndurchmesser unterscheiden sich dann in dem Bohrungsinnendurchmesser in der Klemmhülse, der den Kanal definiert, in der das Kabel aufgenommen wird.

Kabelverschraubungen dieser Art funktionieren zuverlässig, erfordern es aber, dass die Wand, durch welche das Kabel hindurchgeführt wird, von beiden Seiten zugänglich ist, um den Montagevorgang auszuführen. Dies liegt einerseits darin begründet, dass von beiden Seiten der Wand Bauelemente der Kabelverschraubung aufzufädeln sind, andererseits darin, dass für die feste Montage zwei solche Bauelemente gegeneinander verspannt, insbesondere verschraubt werden müssen.

Aus DE 103 576 646 A1 ist eine Kabelverschraubung vorbekannt, bei der ein Doppelnippel mit daran verschraubtem Gewindeteil durch eine Gehäuseöffnung hindurchgeführt wird und sich am Gewindeteil ausgeformte Haltefinger mit ihren freien Enden an der Rückseite der Wandung, in der die Gehäuseöffnung ausgebildet ist und an der Lochleibung der Lochung der Wandung anlegen. Die Haltefinger weisen hierzu an ihren freien Enden eine Stufenabsatz auf, der eine axial gerichtete Flanke und eine radial gerichtete Flanke darstellt. Das Gewindeteil weist zur Verbindung mit dem Doppelnippel ein Innengewinde auf, welches axial benachbart zu den Haltefingern mit einem durchgehenden Verlauf über den gesamten Umfang des Gewindeteils angeordnet ist.

Aus DE 41 28 632 C1 ist eine Kabelverschraubung bekannt, bei der an einem Montagestutzen an einem Ende mehrere Einschnappklemmen ausgebildet sind, die nach Hindurchschieben durch eine Gehäusebohrung nach radial auswärts gerichtet sind und eine Verriegelung des Montagestutzens durch eine von außen ausgeführte Verschraubung auf einem Gewinde des Montagestutzens erlauben. Aus DE 10 2005 017 690 A1 ist eine ähnliche Kabeldurchführung bekannt, bei der die Schnappelemente solcher Art fortgebildet sind, dass eine unerwünschte Spreizung bei der Montage durch Zentrierflächen verhindert werden kann. Kabeldurchführungen dieser Bauart ermöglichen zwar eine einseitige Montage, weisen aber den Nachteil auf, dass sie hinsichtlich ihrer Variabilität für unterschiedliche Wandstärken des Gehäuses, in das sie eingesetzt werden, limitiert sind. Entweder wird bei Kabeldurchführungen dieser Bauweise eine große Gewindelänge für die Gegenmutter vorgesehen, wodurch bei kleinen Gehäusewandungen ein unerwünschter großer Überstand der Kabeldurchführung auftritt, der hinsichtlich beengter Montageverhältnisse nachteilig und zudem anfällig für Beschädigungen durch Abscherbewegungen oder Biegekräfte ist. Alternativ können Kabeldurchführungen dieser Bauart als Satz bereit gestellt werden, in dem Gehäusestutzen mit unterschiedlichen Gewindelängen bereit gestellt sind, um eine geeignete Auswahl und Länge für jede Gehäusewandstärke bereit zu stellen. Dies bedingt jedoch hohe Werkzeugkosten und zudem eine umfangreiche Lagerhaltung beim Monteur, um die jeweils passende Kabeldurchführung bereit zu stellen. Der Erfindung liegt als erster Aspekt zugrunde, eine Kabeldurchführung bereit zu stellen, welche eine vereinfachte und schnelle Montage bei zugleich günstigen Montagebedingungen in beengten Platzverhältnissen bereit zu stellen. In einigen Montagesituationen ist der Montageaufwand solcher Kabelverschraubungen zu hoch und umständlich und erfordert zu viel Zeit. Der Erfindung liegt die Aufgabe zugrunde, eine Kabelverschraubung bereitzustellen, die in kürzerer Zeit montiert werden kann.

Diese Aufgabe wird erfindungsgemäß nach einem ersten Aspekt gelöst durch eine Kabelverschraubung nach Anspruch 1. Die Aufgabe wird erfindungsgemäß nach einem zweiten Aspekt gelöst durch eine Kabelverschraubung nach Anspruch 2. Die erfindungsgemäße Kabelverschraubung ermöglicht es, dass die Montage der Kabelverschraubung nur von einer Seite der Wand, durch welche das Kabel hindurchgeführt werden soll, erfolgt. Es ist damit bei Verwendung der erfindungsgemäßen Kabelverschraubung nicht mehr erforderlich, von der anderen Seite beziehungsweise von beiden Seiten dieser Wand Montagevorgänge auszuführen, was den Montageaufwand erheblich vereinfacht und die Montagezeit verkürzt.

Die erfindungsgemäße Kabelverschraubung weist zu diesem Zweck eine Einsteckhülse auf, die in die Bohrung in der Wand teilweise eingesteckt werden kann. Die Einsteckhülse ist dabei so ausgeführt, dass sie zumindest zwei Haltezungen aufweist, die hierbei eine spezifische Haltewirkung in Zusammenwirkung mit der Bohrung ausüben. Diese Haltezungen weisen einerseits jeweils eine Zentrierfläche auf, andererseits jeweils eine Haltefläche. Die Zentrierfläche dient dazu, die Haltezungen in Bezug auf die Bohrung zu zentrieren und zu verhindern, dass sich die Haltezungen im Zuge der weiteren Montage aufspreizen. Die Haltefläche dient dazu, eine Gegenhaltekraft auf die Rückseite der Wand, also auf die Wandseite, auf welcher keine Montagevorgänge ausgeführt werden, auszuüben. Die elastische Verformbarkeit der Haltezungen ermöglicht es, dass die Einsteckhülse teilweise durch die Bohrung hindurchgeführt wird, wobei die Haltezungen in der zweiten Position sind und es dadurch ermöglicht wird, dass die Halteflächen der Haltezungen durch die Bohrung hindurchtreten. Die Einsteckhülse wird dabei soweit durch die Bohrung hindurchgeschoben, dass die Halteflächen auf, der Montageseite gegenüberliegenden Seite in die erste Position gehen können und folglich nach Art eines Widerhakens ein Zurückziehen der Einsteckhülse verhindern. Die Zentrierflächen der Haltezungen kommen hierbei im Inneren der Bohrung zu liegen und hindern die Haltezungen daran, bei Aufbringen einer Rückzugkraft, welche entgegen der Einsteckbewegung gerichtet ist, sich aufzuspreizen. Dadurch können über die Haltezungen hohe Haltekräfte und folglich Montagekräfte übertragen werden, was eine zuverlässige Verankerung der Kabelverschraubung in der Bohrung ermöglicht.

Die Haltezungen können beispielsweise mittels eines Filmschaniers, insbesondere eines elastisch nach außen vorspannenden Filmschaniers an dem Grundkörper angeordnet sein, um die gewünschte Funktion zu erzielen.

Grundsätzlich ist es zu verstehen, dass als Nenndurchmesser im Sinne der Erfindung ein Nenn- Bohrungsdurchmesser zu verstehen ist. In gleicher Funktionsweise kann im Sinne eines Nenndurchmessers aber auch hierunter der Durchmesser eines Abschnitts der Einsteckhülse verstanden werden, welcher auf Höhe der Zentrierflächen der Haltezungen liegt. Insbesondere entspricht der Nenndurchmesser dem Durchmesser, der durch die Zentrierflächen in der ersten Position eingenommen wird.

Dier erfindungsgemäße Kabelverschraubung zeichnet sich weiterhin dadurch aus, dass die Klemmhülse mit der darin ausgeführten Kabelklemmung und die Einsteckhülse mit den daran ausgeführten elastischen Haltezungen als von einander getrennte Bauteile ausgeführt sind, die mit einander lösbar verbunden werden können. Diese Ausgestaltung der erfindungsgemäßen Kabelverschraubung ermöglicht es, dass die Kabelverschraubung einerseits für einen großen Bereich von Gehäusewandstärken eingesetzt werden kann, zugleich aber keinen für beengte Platzverhältnisse nachteiligen großen Überstand aufweist, wenn die Kabelverschraubung in Gehäusen mit geringer Wandstärke eingesetzt wird. Dies wird erfindungsgemäß erreicht, indem durch die separate Ausführung von Einsteckhülse und Klemmhülse diese in der Längsrichtung zueinander beweglich ausgeführt werden können, um hierdurch entsprechende Längenunterschiede auszugleichen und die Kabelverschraubung insgesamt je nach Wandstärke des Gehäuses in einer größeren oder kleineren Länge in der Endmontageposition zu erhalten. Die Verbindung zwischen Klemmhülse und Einsteckhülse kann beispielsweise als Rastverbindung, Gewindeverbindung oder Klemmverbindung ausgeführt sein. Dabei liegt ein spezifischer Vorteil der erfindungsgemäßen Ausführung darin, dass durch die Zentrierflächen an den Haltezungen die Einsteckhülse in eine durch Reibung zwischen den Zentrierflächen und der Gehäusebohrung und Formschluss zwischen den Halteflächen und der Gehäusewand stabilisierte Position gebracht werden kann, die den Montagevorgang mit der Klemmhülse ermöglicht. So wird beispielsweise im Falle einer Gewindeverbindung durch die Zentrierflächen der Haltezungen eine Reibkraft in Umfangrichtung erzielt, welche ausreichend hoch ist, um ein unerwünschtes Mitdrehen der Einsteckhülse beim Anzugsvorgang des Gewindes zu verhindern.

Zu diesem Zweck ist gemäß einer bevorzugten Ausführungsform vorgesehen, dass die Haltezungen solcher Art nach radial auswärts vorgespannt sind, dass die Zentrierflächen der Haltezungen an die Innenwandung der Gehäusebohrung gepresst werden und hierbei insbesondere eine Reibkraft erzeugen, welche der Umfangskraft durch den Montagevorgang zwischen Klemmhülse und Einsteckhülse, also insbesondere einer hierbei ausgeübten Einschraubkraft, entgegen wirkt.

Gemäß einer ersten bevorzugten Ausführungsform ist vorgesehen, dass die Klemmhülse und das Klemmelement mittels einer Gewindeverbindung verbunden sind, insbesondere indem die Klemmhülse an einem ersten Ende ein Außengewinde aufweist, mit dem ein Innengewinde des Klemmelements zusammenwirkt. Mit dieser Ausgestaltung wird eine vorteilhafte Verbindungsweise zwischen Klemmhülse und Klemmelement bereitgestellt, insbesondere indem das Klemmelement als Überwurfmutter ausgebildet ist und auf ein Außengewinde der Klemmhülse aufgeschraubt werden kann. Dabei ist insbesondere vorteilhaft, dass durch die mittels Einsteckhülse und Klemmhülse erzielbare Verankerung in einer Bohrung einer Wandung die Klemmhülse drehmomentfest in der Wandung kraftschlüssig verankert werden kann und hierdurch das Klemmelement oftmals ohne ein Gegenhalten auf die Klemmhülse aufgeschraubt werden kann.

Erfindungsgemäß ist nach dem ersten Aspekt der Erfindung vorgesehen, dass die Klemmhülse und die Einsteckhülse mittels einer Gewindeverbindung verbunden sind, indem die Klemmhülse an einem ihrem ersten Ende gegenüberliegenden zweiten Ende ein Außengewinde aufweist, mit dem ein Innengewinde der Einsteckhülse zusammenwirkt.

Diese Ausgestaltung stellt eine Verbindungsweise zwischen Klemmhülse und Einsteckhülse bereit, die einen einfachen Montagevorgang ermöglicht. Dabei ist es insbesondere vorteilhaft, dass die Einsteckhülse in einer ersten Phase des Montagevorgangs, in dem noch geringe Montagekräfte aufgebracht werden, zwar nur in geringem Maße drehmomentfest in Bezug auf die Wand und Bohrung befestigt ist, mit zunehmenden Montagekräften aber aufgrund der geometrischen Ausgestaltung von Zentrierflächen und Halteflächen diese drehmomentfeste Verbindung belastbarer gegen ein Drehmoment wirkt. Hierdurch wird mittels der Einsteckhülse eine ausreichend drehmomentfeste Verankerung auf kraftschlüssige Weise innerhalb der Bohrung erzielt, wodurch sich die Einsteckhülse auch bei hohen Anzugskräften, die auf die Klemmhülse aufgebracht werden, nicht mitdrehen kann und ein sicheres Anziehen ermöglicht. Hierzu ist es insbesondere vorteilhaft, die Einsteckhülse aus einem Material auszubilden, welches einen für eine solche kraftschlüssige Verankerung ausreichend hohen Reibkoeffizienten gegenüber typischen Wandungsmaterialien erzielt, beispielsweise aus Polyamid, Polyethylen, PVC [gegebenenfalls weitere Materialbeispiele angeben].

Weiter ist es bevorzugt, dass an der Klemmhülse einen Werkzeugangriffabschnitt zum Aufbringen eines Drehmoments aufweist, insbesondere einen Außensechskantabschnitt. Ein solcher Werkzeugangriffabschnitt dient zur Aufbringung eines ausreichend hohen Drehmoments auf die Klemmhülse, um den Montagevorgang zu erreichen. Zugleich kann dieser Werkzeugangriffabschnitt dazu dienen, die Klemmhülse gegen ein Drehmoment zu sichern, wenn das Klemmelement auf die Klemmhülse aufgeschraubt wird.

Weiterhin ist es bevorzugt, dass die Einsteckhülse drei gleichmäßig über den Umfang verteilte Haltezungen angeordnet sind. Durch solche drei gleichmäßig über den Umfang verteilte Haltezungen wird eine zuverlässige Abstützung über die Halteflächen in axialer Richtung erzielt, die in hohem Maße belastbar und zugleich verkantungssicher wirkt. Grundsätzlich ist zu verstehen, dass je nach gewünschter Belastbarkeit auch mehr als drei, beispielsweise vier um 90 Grad versetzte Haltezungen oder noch mehr Haltezungen an der Einsteckhülse vorgesehen sein können.

Gemäß einer weiteren bevorzugten Ausführungsform ist vorgesehen, dass zwischen den Haltezungen Zylinderumfangsabschnitte an der Einsteckhülse ausgebildet sind, deren Außendurchmesser kleiner oder gleich dem Nenndurchmesser ist. Diese Zylinderumfangsabschnitte sind insbesondere nicht im gleichen Maße elastisch wie die Haltezungen, insbesondere bilden sie den Grundkörper oder einen Teils des Grundkörpers der Einsteckhülse aus, sodass die Haltezungen beispielsweise an diesen Zylinderumfangsabschnitten elastisch befestigt sein können.

Erfindungsgemäß ist nach dem zweiten Aspekt der Erfindung vorgesehen, dass an der Einsteckhülse mehrere gleichmäßig über den Umfang verteilte Haltezungen angeordnet sind und zwischen jeweils zwei Haltezungen ein starr ausgebildeter Umfangsabschnitt ausgebildet ist, an dem ein Innengewindeumfangsabschnitt ausgebildet ist, wobei die Innengewindeumfangsabschnitte der starr ausgebildeten Umfangsabschnitte als Innengewinde wirken, in das ein Außengewinde der Klemmhülse eingreift. Auf diese Weise können an der Einsteckhülse belastbare Gewindeabschnitte bereitgestellt werden, die zusammenwirken, um eine zuverlässige Schraubverbindung zu erzielen, beispielsweise um die Einsteckhülse mit der Klemmhülse zu verschrauben. Dabei ist zu verstehen, dass die Umfangsabschnitte in einer funktionell ähnlichen Weise wie die Haltezungen einen Außendurchmesser aufweisen, der sich in der Bohrung einer Wand radial abstützt, wenn die Einsteckhülse in diese Bohrung eingesetzt ist, folglich also etwa dem Nenndurchmesser entspricht. Hierdurch wird verhindert, dass sich die Umfangsabschnitte unter der Belastung des Gewindeanzugs auf das an ihnen ausgebildete Innengewinde aufspreizen und folglich das Gewinde außer Eingriff kommt.

Noch weiter ist bevorzugt, dass an dem Klemmelement ein zur Drehmomentübertragung um die Längsachse der Kabelverschraubung ausgebildeter Werkzeugangriffabschnitt ausgebildet ist, vorzugsweise ein Außensechskantabschnitt. Nach dieser Ausführungsform ist das Klemmelement insbesondere als Überwurfmutter oder Schraubmutter ausgebildet und kann somit in einer effizienten und schnellen Weise montiert werden und mit einem hohen Drehmoment angezogen werden.

Schließlich kann die erfindungsgemäße Kabelverschraubung fortgebildet werden, indem an dem Klemmelement und der Klemmhülse jeweils ein zur Drehmomentübertragung um die Längsachse der Kabelverschraubung ausgebildeter Werkzeugangriffabschnitt ausgebildet ist, vorzugsweise jeweils ein Außensechskantabschnitt. Dabei kann bevorzugt vorgesehen sein, dass die Werkzeugangriffabschnitte von Klemmelement und Klemmhülse geometrisch übereinstimmend sind oder aber zumindest geometrisch solcher Art ausgebildet sind, dass sie mit ein und demselben Werkzeug zusammenwirken können, um ein Drehmoment zu übertragen. Insbesondere können hier übereinstimmende Außensechskantabschnitte mit gleicher Schlüsselweite vorgesehen sein, um eine einfache Montage mit einem einzigen Werkzeug zu ermöglichen.

Ein weiterer Aspekt der Erfindung ist eine Einsteckhülse umfassend einen Grundkörper, der eine Außenfläche aufweist, deren Außendurchmesser einen Nenndurchmesser nicht überschreitet, zumindest zwei über den Umfang der Außenfläche des Grundkörpers verteilte Haltezungen mit jeweils einer ersten Zentrierfläche und einer zu ersten Zentrierfläche benachbarten, abgewinkelten Haltefläche, die sich ausgehend von der Zentrierfläche nach außen erstreckt, wobei die Haltezungen mit dem Grundkörper beweglich und solcherart elastisch vorgespannt verbunden sind, dass jede Haltezunge aus einer ersten Position, in welcher die Haltefläche in einem größeren Außendurchmesser ragt als der Nenndurchmesser und die Zentrierfläche in einem Außendurchmesser liegt, der kleiner oder gleich dem Nenndurchmesser ist, und gegen die durch die elastisch vorgespannte Verbindung bewirkte Vorspannkraft in eine zweite Position bewegt werden können, in welcher die Haltefläche und die Zentrierfläche in einem Außendurchmesser liegen, der kleiner als der Nenndurchmesser ist.

Eine solche Einsteckhülse kann insgesamt und allgemein dazu dienen, um Elemente in einer Bohrung einer Wand zu verankern, ohne hierbei auf die Rückseite der Wand zugreifen zu müssen. Die Einsteckhülse eignet sich somit beispielsweise dazu, um von einer Frontseite einer Wand aus eine Schraube in dieser Wand zu verankern, ohne das hierfür die Notwendigkeit besteht, ein Gewinde zu schneiden oder von der Rückseite der Wand eine Gegenhaltekraft auf eine Mutter, Hülse oder dergleichen aufbringen zu müssen.

Die Einsteckhülse kann fortgebildet werden, indem an der Einsteckhülse drei gleichmäßig über den Umfang verteilte Haltezungen angeordnet sind. Diesbezüglich wird auf die vorangegangene Beschreibung der Vorteile solcher drei Haltezungen Bezug genommen.

Weiterhin kann die Einsteckhülse fortgebildet werden, indem zwischen den Haltezungen Zylinderumfangsabschnitte an der Einsteckhülse ausgebildet sind, deren Außendurchmesser kleiner oder gleich dem Nenndurchmesser ist. Auch bezüglich dieser Zylinderumfangsabschnitte wird Bezug auf die vorangehende Erläuterung der hiermit zusammenhängenden Vorteile Bezug genommen.

Schließlich kann die Einsteckhülse fortgebildet werden, indem an der Einsteckhülse mehrere gleichmäßig über den Umfang verteilte Haltezungen angeordnet sind und zwischen jeweils zwei Haltezungen ein starr ausgebildeter Umfangsabschnitt ausgebildet ist, an dem ein Innengewindeumfangsabschnitt ausgebildet ist, wobei die Innengewindeumfangsabschnitte der starr ausgebildeten Umfangsabschnitte als Innengewinde wirken. Mit dieser Ausgestaltung wird eine besonders vorteilhafte Form von Einsteckhülse bereitgestellt, die zur sicheren Verankerung von Schrauben in einem Gewinde dienen kann, ohne dass hierzu eine Gegenhaltekraft von der Rückseite einer Wand aufgebracht werden muss, in der eine Bohrung angeordnet ist und ohne das in dieser Bohrung ein Gewinde eingebracht werden muss.

Bevorzugte Ausführungsformen der Erfindungen werden anhand der beiliegenden *Figuren* erläutert. Es zeigen:
Fig. 1 eine perspektivische Ansicht einer erfindungsgemäßen Kabelverschraubung
Fig. 2 eine perspektivische Ansicht der erfindungsgemäßen Kabelverschraubung in einem in ein Gehäuse montiertem Zustand,
Fig. 3 eine Ansicht der Montagesituation gemäß Fig. 2 mit teilweise aufgeschnittenem Gehäuse in einer Ansicht schräg in das Gehäuse hinein,
Fig. 4 eine perspektivische Ansicht einer erfindungsgemäßen Einsteckhülse in Zusammenwirkung mit einer Schraube,
Fig. 5 eine perspektivische Ansicht der Anordnung gemäß Fig. 4 vor dem Einsetzen in eine Bohrung in einer Gehäusewand,
Fig. 6 eine Ansicht der Elemente gemäß Fig. 5 in montiertem Zustand mit teilweise aufgeschnittenem Gehäuse in einer Ansicht in den Innenraum des Gehäuses,
Fig. 7 eine perspektivische Ansicht einer Montageanordnung mit Verwendung der Elemente gemäß Fig. 4,
Fig. 8 eine perspektivische Ansicht einer erfindungsgemäßen Einsteckhülse,
Fig. 9 eine perspektivische Ansicht einer zweiten Ausführungsform der erfindungsgemäßen Kabelverschraubung,
Fig. 10a eine perspektivische Ansicht der zweiten Ausführungsform vor Montage,
Fig. 10b eine Ansicht gemäß Figur 10a im Montagevorgang und
Fig. 10c eine Ansicht gemäß Figur 10a nach erfolgter Montage von außen,
Fig. 10d eine Ansicht gemäß Figur 10a nach erfolgter Montage von innen.

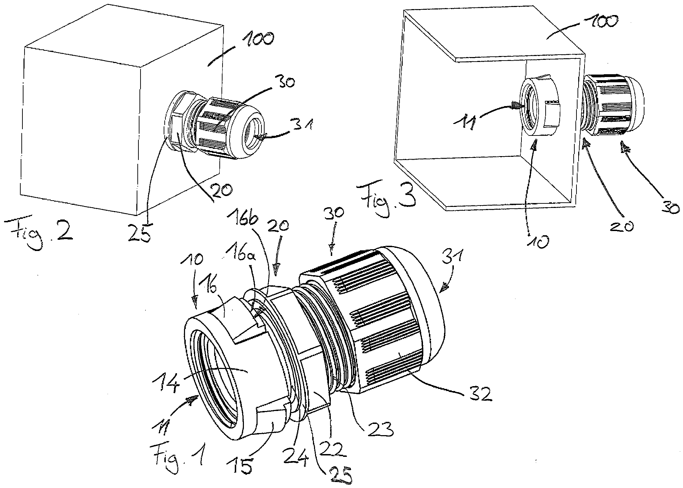

Figur 1 zeigt eine Ausführungsform einer erfindungsgemäßen Kabelverschraubung, die aus grundsätzlich drei separaten Bauelementen besteht. Die Kabelverschraubung setzt sich aus einer Einsteckhülse 10, einer Klemmhülse 20 und einem Klemmelement 30 zusammen. Die Einsteckhülse 10 weist eine Durchgangsbohrung 11 auf, in der ein Innengewinde 12 ausgeformt ist. In das Innengewinde 12 ist ein Außengewinde 24 eingeschraubt, welches an einem Ende der Klemmhülse 20 ausgebildet ist. Die Klemmhülse 20 weist weiterhin ein Außengewinde 23 an ihrem anderen Ende auf. Außengewinde 23 und 24 sind konzentrisch und im Durchmesser übereinstimmend.

Zwischen den Außengewinden 23, 24 ist ein Sechskantabschnitt 22 an der Einsteckhülse ausgebildet, der auf seiner zu dem Außengewinde 24 weisenden Seite einen Flansch 25 aufweist. Der Flansch 25 dient zur Auflage auf einer Gehäusewand auf der Montageseite, von der aus die erfindungsgemäße Kabelverschraubung in eine Bohrung in die Gehäusewand eingesetzt wird, im Umfeld dieser Bohrung. Auf das Außengewinde 23 ist das als Überwurfmutter 30 ausgebildete Klemmelement aufgeschraubt. Die Überwurfmutter umfasst an ihrem Außenumfang einen Sechskantabschnitt 32 und weist weiterhin eine Durchgangsbohrung 31 auf, die in dem montierten Zustand der Kabelverschraubung konzentrisch zu der Durchgangsbohrung 11 in der Einsteckhülse 10 liegt.

Weiterhin weist die Klemmhülse 20 eine Durchgangsbohrung auf, die im montierten Zustand ebenso koaxial zu den Durchgangsbohrungen 11, 31 liegt und folglich einen durchgehenden Längskanal durch die Kabelverschraubung ausbildet.

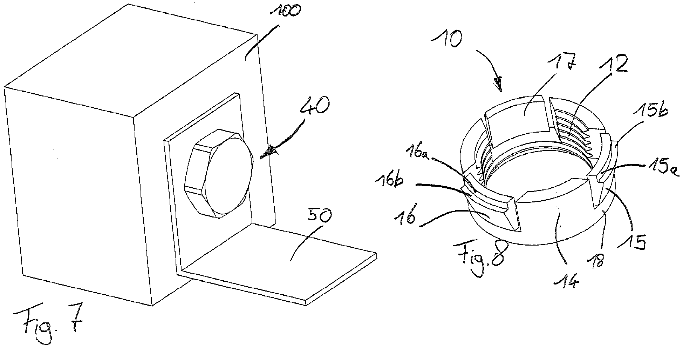

An der Einsteckhülse 10 sind drei in Umfangsrichtung verteilte Haltezungen 15-17 angeordnet, wie insbesondere aus Figur 8 ersichtlich. Die Haltezungen 15-17 sind mittels eines Filmscharniers an einem starren Grundkörper 14 angeformt und in Umfangslücken dieses Grundkörpers 14 platziert. Zwischen jeweils zwei Haltezungen 15, 16 bzw. 17 ist ein starrer Abschnitt des Grundkörpers 14 ausgebildet, der auf seiner innenliegenden Wandseite einen Innengewindeabschnitt 12 aufweist. Die Innengewindeabschnitte dieser drei starren Abschnitte wirken gemeinsam mit einem Ringabschnitt 18, der ebenfalls auf der Innenseite das Gewinde 12 aufweist, zusammen um ein Innengewinde an der Einsteckhülse auszubilden.

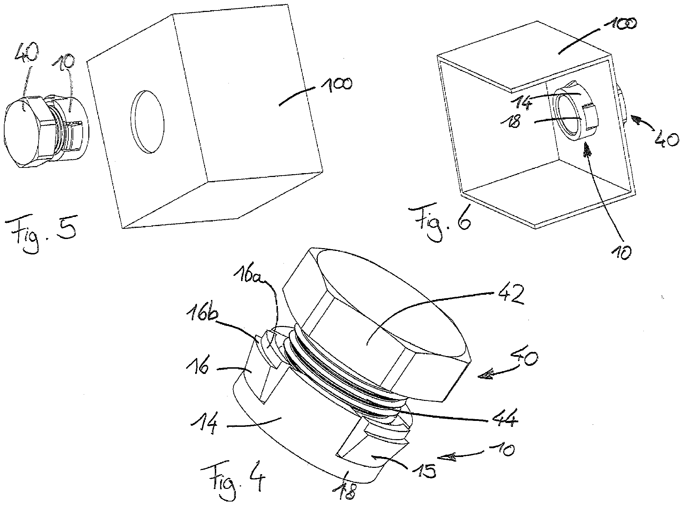

An jeder Haltezunge 15-17 ist jeweils eine Zentrierfläche ausgebildet, dargestellt in den Figuren 4 und 8 als Zentrierfläche 15a, 16 a. Diese Zentrierfläche wird durch einen zylinderförmigen Umfangsabschnitt gebildet, der im Wesentlichen konzentrisch zu der gesamten Umfangsfläche der Einsteckhülse liegt und koaxial zur Längsachse der Kabelverschraubung angeordnet ist. Weiterhin weist jede Haltezunge 15-17 eine Haltefläche auf, dargestellt in den Figuren 4 und 8 als Halteflächen 15b, 16b. Die Halteflächen 15b, 16b sind als axiale Stirnumfangsabschnitte angeordnet und liegen senkrecht zu den Zentrierflächen 15a, 16a. Die Zentrierflächen 15a, 16a und Halteflächen 15b, 16b bilden eine Stufe, die sich nach stirnseitig außen öffnet und zur Abstützung an dem Innenrand einer Bohrung dient, in welche die erfindungsgemäße Kabelverschraubung eingesetzt wird.

Diese Abstützung und die gesamte Funktionsweise der Kabelverschraubung ist insbesondere aus den Figuren 3, 5 und 6 ersichtlich. Die Einsteckhülse wird zunächst, vorzugsweise mit bereits eingeschraubter Klemmhülse 20 oder einer eingeschraubten Sechskantschraube 40, wie in Figur 5 ersichtlich, in die vorbereitete Bohrung eingeschoben. In dem Normalzustand stehen hierbei die Haltezungen 15-17 nach außen über den Umfang des Grundkörpers 14 vor und werden bei diesem Einschiebevorgang in die Bohrung elastisch nach innen verformt, so dass sie den Durchtritt der Einsteckhülse ermöglichen. Zu diesem Zweck sind an den Haltezungen schräg verlaufende Flächen ausgebildet, welche beim Einschieben der Einsteckhülse eine nach radial innen wirkende Kraft auf die Haltezungen durch Abstützung an der Innenwand der Bohrung bewirken.

Sobald die Einsteckhülse um einen bestimmten Betrag in die Bohrung eingeschoben wird, können die Haltezungen zurückschnappen, wenn die Halteflächen 15b, 16b auf die der Montageseite gegenüberliegende Gehäusewand gelangt sind. In diesem Zustand kommen die Zentrierflächen 15 b, 16b an der Innenwandung der Bohrung zu liegen und dienen der Zentrierung. Hierdurch wird verhindert, dass sich die Haltezungen 15, 16 weiter in radialer Richtung nach außen aufspreizen können.

Nachdem die Einsteckhülse solcherart eingeschoben wurde, kann die Klemmhülse 20 mittels des daran angeformten Sechskantabschnitts 22 fest eingeschraubt werden, bis die Flanschfläche 25 fest an der montageseitigen Gehäusewandfläche anliegt. In gleicher Weise könnte die Schraube 40 fest angezogen werden. Die Einsteckhülse stützt sich hierbei mit ihren Halteflächen 15b, 16b von innen an der Gehäusewand ab und bewirkt eine Drehmomentsicherung gegen das Eindrehmoment der Klemmhülse 20 bzw. der Schraube 40.

Nachdem auf diese Weise die Kabelverschraubung in der Bohrung im Gehäuse 100 montiert wurde, kann die Überwurfmutter 30 aufgeschraubt und angezogen werden, wodurch an dem zur Überwurfmutter 30 weisenden Ende der Klemmhülse eine Verringerung des Innendurchmessers bewirkt wird und ein in dem Durchgangskanal in der Kabelverschraubung angeordnetes Kabel kraftschlüssig festgesetzt wird.

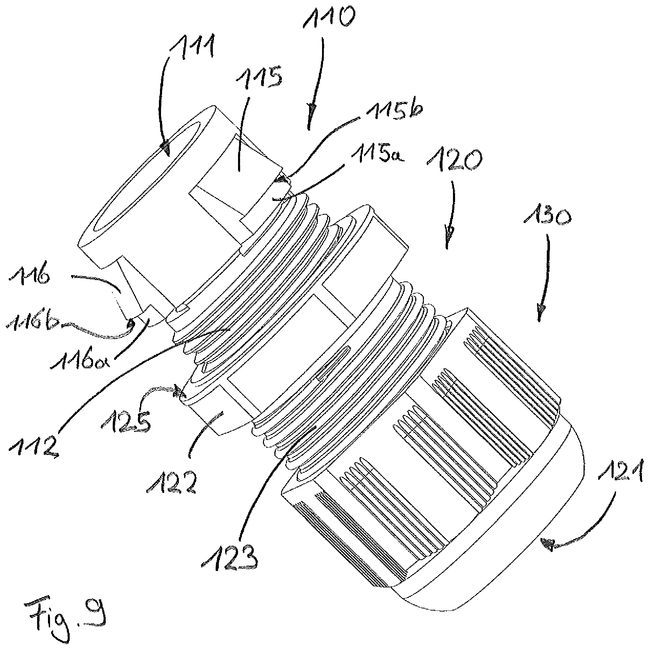

Figur 9 zeigt eine zweite Ausführungsform der Erfindung, welche prinzipiell übereinstimmend zur ersten Ausführungsform ausgeführt ist, sich jedoch in der Verbindungsweise zwischen Einsteckhülse und Klemmhülse von dieser ersten Ausführungsform unterscheidet.

Auch die zweite Ausführungsform umfasst eine Einsteckhülse 110, eine Klemmhülse 120 und ein Klemmelement 130. Die Einsteckhülse 110 weist eine Durchgangsbohrung 111 auf, die koaxial zu einer Durchgangsbohrung 121 der Klemmhülse ausgebildet ist. Die Klemmhülse weist ein Außengewinde 123 auf, auf welche das als Überwurfmutter 130 ausgebildete Klemmelement aufgeschraubt werden kann, um hierdurch eine Kabelklemmung zu bewirken. Überwurfmutter und deren Funktionsweise zur Kabelklemmung stimmen bei der zweiten Ausführungsform mit der ersten Ausführungsform überein.

Ebenso weist die zweite Ausführungsform einen Flansch 125 an einem Sechskantabschnitt 122 auf, der als Auflage auf einer Gehäusewand auf der Montageseite dient, auch diese Ausgestaltung ist übereinstimmend zur ersten Ausführungsform.

Abweichend von der ersten Ausführungsform weist die Einsteckhülse 110 der zweiten Ausführungsform ein Außengewinde 112 auf, das in der gezeigten vorbereiteten Montageposition zwischen den Haltezungen an der Einsteckhülse und dem Sechskantabschnitt 122 angeordnet ist. Dieses Außengewinde 112 wirkt mit einem Innengewinde zusammen, das in der Klemmhülse auf der Seite des Sechskantabschnitts 122 ausgebildet ist. Hierdurch kann durch Verschraubung des Innengewindes der Klemmhülse mit dem Außengewinde der Einsteckhülse der Abstand zwischen dem Flansch 125 und den Haltezungen 115-117 verringert werden und die spielfreie und stabile Fixierung der Kabelverschraubung in einer Gehäusebohrung erreicht werden. Im Zuge dieses Verschraubungsvorgangs wirken die Zentrierflächen an den Haltezungen, ebenso wie bei der ersten Ausführungsform, als reibkrafterzeugende Gegenhalter, um ein Mitdrehen der Einsteckhülse während dieses Montagevorgangs zu verhindern. Mit zunehmender Montagekraft wirken auch die in reibschlüssigen Kontakt mit der Gehäusewand tretenden Halteflächen 115b, 116b als reibkrafterzeugende Gegenhalteelemente, so dass das steigende Umfangs-Montagedrehmoment des Einschraubvorgangs auch durch entsprechend ansteigende Gegenhaltekräfte in Umfangsrichtung aufgefangen wird.

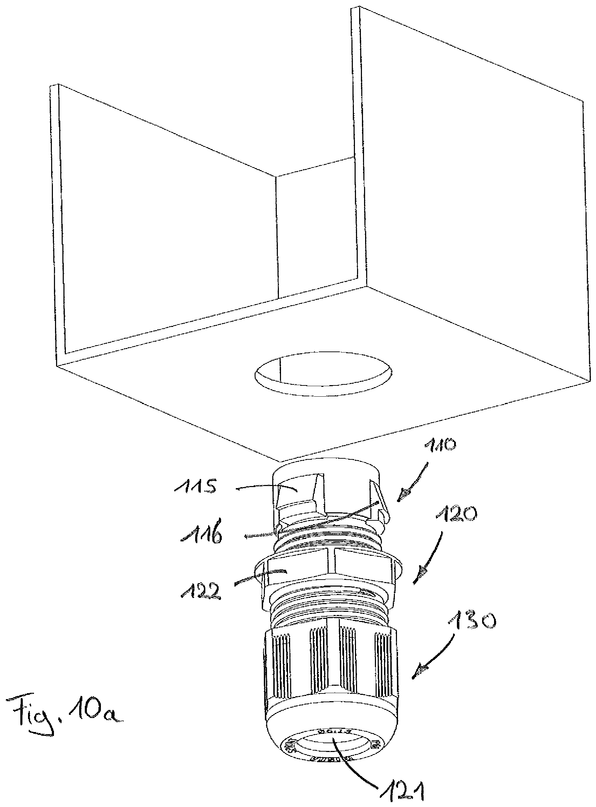

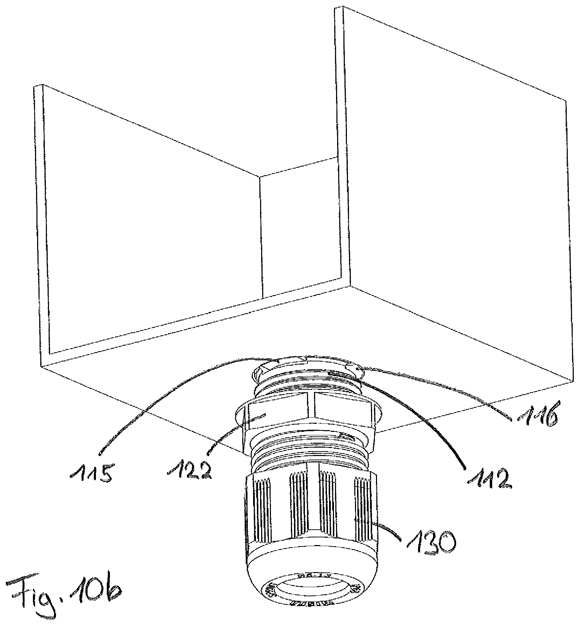

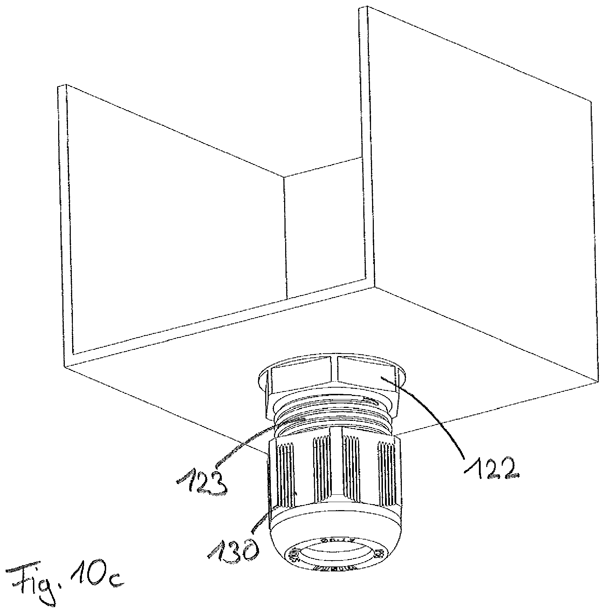

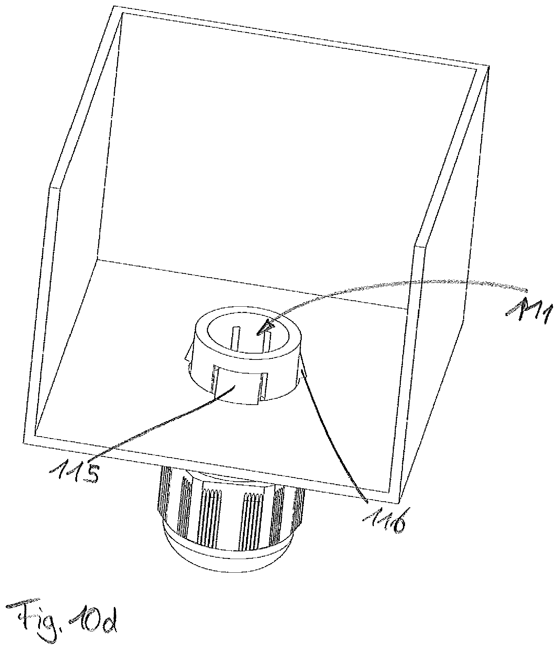

Figuren 10a-d zeigen die zweite Ausführungsform vor, während und nach der Montage. Wie erkennbar ist, ist dass Außengewinde 112 vor der Montage soweit aus der Klemmhülse heraus geschraubt, dass die Haltezungen während des in Figur 10b gezeigten Einsteckvorgangs zunächst elastisch nach innen und dann elastisch nach außen federn können, um eine Gegenhaltekraft in axialer Richtung und in Umfangsrichtung zu erzielen. Sodann wird nach erfolgtem Einstecken der Kabelverschraubung durch Aufbringen eines Drehmoments über den Sechskantabschnitt 122 das Klemmelement gegenüber der in der Gehäusebohrung fest gehaltenen Einsteckhülse verdreht und so der Abstand zwischen den Haltezungen und dem Flanschabschnitt 125 und damit die Gesamtlänge der Kabelverschraubung verringert und letztlich eine Klemmkraft auf die Gehäusewand durch beidseitige Einspannung erzeugt. Die so erfolgte Montage ist in 110c, d nach erfolgter Fixierung wiedergegeben.

## Patentansprüche

1. Kabelverschraubung zur Durchführung eines Kabels durch eine Bohrung in einer Gehäusewand und Fixierung des Kabels in Bezug auf die Gehäusewand, umfassend:
- eine Klemmhülse (20) mit einem Klemmabschnitt mit
∘ einer vorzugsweise zylindrischen Innenfläche (31), die einen Hülseninnendurchmesser zur Halterung des Kabels aufweist, und
∘ einem Flanschabschnitt (25), der größer als ein auf die Bohrung bezogener Nenndurchmesser ist,
- ein Klemmelement (30), welches ausgebildet ist, um solcherart mit der Klemmhülse (20) verbunden zu werden, dass hierdurch der Hülseninnendurchmesser aus einer ersten Durchmesserabmessung zumindest über Abschnitte des Umfanges der Innenfläche (31) in eine zweite Durchmesserabmessung gebracht wird, die kleiner ist als die erste Durchmesserabmessung;
- eine mit der Klemmhülse (20) mittels Verbindungsmitteln verbindbare Einsteckhülse (10) mit,
- einem Grundkörper (14), der eine Außenfläche aufweist, deren Außendurchmesser einen Nenndurchmesser nicht überschreitet,
- zumindest zwei über den Umfang der Außenfläche des Grundkörpers verteilten Haltezungen (15, 16) mit jeweils einer ersten Zentrierfläche (15a, 16a) und einer zu ersten Zentrierfläche benachbarten, abgewinkelten Haltefläche (15b, 16b), die sich ausgehend von der Zentrierfläche nach außen erstreckt,
- wobei die Haltezungen (15, 16) mit dem Grundkörper (14) beweglich und solcherart elastisch vorgespannt verbunden sind, dass jede Haltezunge
∘ aus einer ersten Position, in welcher die Haltefläche (15b, 16b) in einen größeren Außendurchmesser ragt als der Nenndurchmesser und die Zentrierfläche (15a, 16a) in einem Außendurchmesser liegt, der kleiner oder gleich dem Nenndurchmesser ist,
∘ gegen die durch die elastisch vorgespannte Verbindung bewirkte Vorspannkraft in eine zweite Position bewegt werden kann, in welcher die Haltefläche (15b, 16b) und die Zentrierfläche (15a, 16a) in einem Außendurchmesser liegen, der kleiner als der Nenndurchmesser ist,
**dadurch gekennzeichnet, dass** die Klemmhülse (20) und die Einsteckhülse (10) mittels einer Gewindeverbindung verbunden sind,
- indem die Klemmhülse an einem ihrem ersten Ende gegenüberliegenden zweiten Ende ein Innengewinde aufweist, mit dem ein Außengewinde (112) der Einsteckhülse zusammenwirkt.

2. Kabelverschraubung nach dem Oberbegriff von Anspruch 1,
**dadurch gekennzeichnet, dass** an der Einsteckhülse mehrere gleichmäßig über den Umfang verteilte Haltezungen angeordnet sind und zwischen jeweils zwei Haltezungen ein starr ausgebildeter Umfangsabschnitt ausgebildet ist, an dem ein Innengewindeumfangsabschnitt ausgebildet ist, wobei die Innengewindeumfangsabschnitte der starr ausgebildeten Umfangsabschnitte als Innengewinde wirken, in das ein Außengewinde der Klemmhülse eingreift.

3. Kabelverschraubung nach Anspruch 1 oder 2
**dadurch gekennzeichnet, dass** die Klemmhülse (20) und das Klemmelement (30) mittels einer Gewindeverbindung verbunden sind, insbesondere indem die Klemmhülse an einem ersten Ende ein Außengewinde aufweist, mit dem ein Innengewinde des Klemmelements zusammenwirkt.

4. Kabelverschraubung nach einem der vorhergehenden Ansprüche,
**dadurch gekennzeichnet, dass** die Klemmhülse einen vorzugsweise einstückig daran angeformten Werkzeugangriffabschnitt zum Aufbringen eines Drehmoments aufweist, insbesondere einen Außensechskantabschnitt.

5. Kabelverschraubung nach einem der vorhergehenden Ansprüche,
**dadurch gekennzeichnet, dass** an der Einsteckhülse drei gleichmäßig über den Umfang verteilte Haltezungen (15, 16, 17) angeordnet sind.

6. Kabelverschraubung nach einem der vorhergehenden Ansprüche,
**dadurch gekennzeichnet, dass** zwischen den Haltezungen Zylinderumfangsabschnitte an der Einsteckhülse ausgebildet sind, deren Außendurchmesser kleiner oder gleich dem Nenndurchmesser ist.

7. Kabelverschraubung nach einem der vorhergehenden Ansprüche,
**dadurch gekennzeichnet, dass** an dem Klemmelement ein zur Drehmomentübertragung um die Längsachse der Kabelverschraubung ausgebildeter Werkzeugangriffabschnitt ausgebildet ist, vorzugsweise ein Außensechskantabschnitt.

8. Kabelverschraubung nach einem der vorhergehenden Ansprüche,
**dadurch gekennzeichnet, dass** an dem Klemmelement und der Klemmhülse jeweils ein zur Drehmomentübertragung um die Längsachse der Kabelverschraubung ausgebildeter Werkzeugangriffabschnitt ausgebildet ist, vorzugsweise jeweils ein Außensechskantabschnitt.

9. Einsteckhülse (10) umfassend
- einen Grundkörper (14), der eine Außenfläche aufweist, deren Außendurchmesser einen Nenndurchmesser nicht überschreitet,
- zumindest zwei über den Umfang der Außenfläche des Grundkörpers verteilte Haltezungen (15, 16, 17) mit jeweils einer ersten Zentrierfläche (15a, 16a) und einer zu ersten Zentrierfläche benachbarten, abgewinkelten Haltefläche (15b, 16b), die sich ausgehend von der Zentrierfläche nach außen erstreckt,
- wobei die Haltezungen mit dem Grundkörper beweglich und solcherart elastisch vorgespannt verbunden sind, dass jede Haltezunge
∘ aus einer ersten Position, in welcher die Haltefläche in einen größeren Außendurchmesser ragt als der Nenndurchmesser und die Zentrierfläche in einem Außendurchmesser liegt, der kleiner oder gleich dem Nenndurchmesser ist,
∘ gegen die durch die elastisch vorgespannte Verbindung bewirkte Vorspannkraft in eine zweite Position bewegt werden kann, in welcher die Haltefläche und die Zentrierfläche in einem Außendurchmesser liegen, der kleiner als der Nenndurchmesser ist,
**dadurch gekennzeichnet, dass** die Haltezungen an der Einsteckhülse über den Umfang gleichmäßig verteilt sind und zwischen jeweils zwei Haltezungen ein starr ausgebildeter Umfangsabschnitt ausgebildet ist, an dem ein Innengewindeumfangsabschnitt (12) ausgebildet ist, wobei die Innengewindeumfangsabschnitte der starr ausgebildeten Umfangsabschnitte als Innengewinde wirken.

10. Einsteckhülse nach dem vorhergehenden Anspruch 9,
**dadurch gekennzeichnet, dass** an der Einsteckhülse drei gleichmäßig über den Umfang verteilte Haltezungen (15, 16, 17) angeordnet sind.

11. Einsteckhülse nach dem vorhergehenden Anspruch 9 oder 10,
**dadurch gekennzeichnet, dass** zwischen den Haltezungen Zylinderumfangsabschnitte an der Einsteckhülse ausgebildet sind, deren Außendurchmesser kleiner oder gleich dem Nenndurchmesser ist.

12. Einsteckhülse nach einem der vorgenannten Ansprüche 9-11,
**dadurch gekennzeichnet, dass** die Haltezungen (15, 16, 17) nach radial auswärts elastisch vorgespannt sind zur Erzeugung einer umfänglich wirkenden Reibkraft in einer Gehäusebohrung mit Nenndurchmesser, welcher der Montagekraft zwischen Klemmhülse und Einsteckhülse, insbesondere einer dabei erfolgenden Verschraubung, entgegen wirkt.

## Claims

1. Cable screw connection for passing a cable through a hole in a housing wall and fixing the cable with regard to the housing wall, comprising:
- a clamp sleeve (20) with a clamping section with
∘ a preferably cylindrical inner area (31) which presents a sleeve internal diameter to hold the cable, and
∘ a flange section (25) which is larger than a nominal diameter based on the hole,
- a clamping element (30) which is developed to be connected to the clamp sleeve (20) in such a way that the sleeve internal diameter is hereby brought from a first diameter dimension at least via sections of the periphery of the inner area (31) to a second diameter dimension which is smaller than the first diameter dimension;
- an insert sleeve (10) that can be connected to the clamp sleeve (20) by means of connecting means, with
- a base body (14) which presents an outer area, the external diameter of which does not exceed a nominal diameter,
- at least two retaining tongues (15, 16) distributed over the periphery of the outer area of the base body, each with a first centering area (15a, 16a) and an angled retaining area (15b, 16b) adjacent to the first centering area which extends outwards from the centering area,
- wherein the retaining tongues (15, 16) are connected to the base body (14) in a movable manner and elastically prestressed in such a way that each retaining tongue
∘ protrudes from a first position in which the retaining area (15b, 16b) protrudes into a larger external diameter than the nominal diameter and the centering area (15a, 16a) lies in an external diameter which is smaller than or equal to the nominal diameter,
∘ can be moved against the prestressing force caused by the elastically prestressed connection into a second position in which the retaining area (15b, 16b) and the centering area (15a, 16a) lie in an external diameter which is smaller than the nominal diameter,
**characterised in that** the clamp sleeve (20) and the insert sleeve (10) are connected by means of a threaded connection,
- whilst the clamp sleeve presents, at a second end opposite its first end, an internal thread with which an external thread (112) of the insert sleeve interacts.

2. Cable screw connection according to the preamble of claim 1,
**characterised in that** a plurality of retaining tongues evenly distributed over the periphery are arranged on the insert sleeve and between each two retaining tongues is developed a rigidly developed periphery section on which an internal thread periphery section is developed, wherein the internal thread periphery sections of the rigidly developed periphery sections act as an internal thread in which an external thread of the clamp sleeve engages.

3. Cable screw connection according to claim 1 or 2,
**characterised in that** the clamp sleeve (20) and the clamping element (30) are connected by means of a threaded connection, in particular whilst at a first end the clamp sleeve presents an external thread with which an internal thread of the clamping element interacts.

4. Cable screw connection according to one of the preceding claims,
**characterised in that** the clamp sleeve presents a tool engagement section preferably formed in one piece thereon for applying a torque, in particular an external hexagonal section.

5. Cable screw connection according to one of the preceding claims,
**characterised in that** three retaining tongues (15, 16, 17) evenly distributed over the periphery are arranged on the insert sleeve.

6. Cable screw connection according to one of the preceding claims,
**characterised in that** cylinder periphery sections are developed between the retaining tongues on the insert sleeve, the external diameter of which is smaller than or equal to the nominal diameter.

7. Cable screw connection according to one of the preceding claims,
**characterised in that** a tool engagement section, preferably an external hexagonal section, developed to transfer the torque on the longitudinal axis of the cable screw connection, is developed on the clamping element.

8. Cable screw connection according to one of the preceding claims,
**characterised in that** in each case a tool engagement section, preferably in each case an external hexagonal section, developed to transfer the torque on the longitudinal axis of the cable screw connection, is developed on the clamping element and the clamp sleeve.

9. Insert sleeve (10) comprising
- a base body (14) which presents an outer area, the external diameter of which does not exceed a nominal diameter,
- at least two retaining tongues (15, 16, 17) distributed over the periphery of the outer area of the base body, each with a first centering area (15a, 16a) and an angled retaining area (15b, 16b) adjacent to the first centering area which extends outwards from the centering area,
- wherein the retaining tongues are connected to the base body in a movable manner and elastically prestressed in such a way that each retaining tongue
∘ protrudes from a first position in which the retaining area protrudes into a larger external diameter than the nominal diameter and the centering area lies in an external diameter which is smaller than or equal to the nominal diameter,
∘ can be moved against the prestressing force caused by the elastically prestressed connection into a second position in which the retaining area and the centering area lie in an external diameter which is smaller than the nominal diameter.
**characterised in that** the retaining tongues on the insert sleeve are evenly distributed over the periphery and between in each case two retaining tongues is developed a rigidly developed periphery section on which an internal thread periphery section (12) is developed, wherein the internal thread periphery sections of the rigidly developed periphery sections act as internal thread.

10. Insert sleeve according to the preceding claim 9, **characterised in that** three retaining tongues (15, 16, 17) evenly distributed over the periphery are arranged on the insert sleeve.

11. Insert sleeve according to the preceding claim 9 or 10, **characterised in that** cylinder periphery sections, the external diameter of which is smaller than or equal to the nominal diameter, are developed on the insert sleeve between the retaining tongues.

12. Insert sleeve according to one of the afore-mentioned claims 9 - 11,
**characterised in that** the retaining tongues (15, 16, 17) are elastically prestressed radially outwards to create an extensive-action frictional force in a housing hole with a nominal diameter which counteracts the assembly force between the clamp sleeve and the insert sleeve, in particular a thereby produced screw connection.

## Revendications

1. Presse-étoupe pour le passage d'un câble à travers un perçage dans une paroi de boîtier et la fixation du câble par rapport à la paroi de boîtier, comprenant :
- une douille de serrage (20) avec une section de serrage avec
-- une surface intérieure (31) de préférence cylindrique qui présente un diamètre intérieur de douille pour le support du câble, et
-- une section de bride (25) qui est plus grande qu'un diamètre nominal relatif au perçage,
- un élément de serrage (30) qui est réalisé afin d'être relié à la douille de serrage (20) de telle manière que le diamètre intérieur de douille soit ainsi amené d'une première dimension de diamètre au moins par des sections de la périphérie de la surface intérieure (31) à une seconde dimension de diamètre qui est inférieure à la première dimension de diamètre ;
- une douille d'enfichage (10) pouvant être reliée à la douille de serrage (20) à l'aide de moyens de liaison,
- un corps de base (14) qui présente une surface extérieure, dont le diamètre extérieur ne dépasse pas un diamètre nominal,
- au moins deux languettes de retenue (15, 16) réparties sur la périphérie de la surface extérieure du corps de base avec respectivement une première surface de centrage (15a, 16a) et une surface de retenue (15b, 16b) coudée contiguë à une première surface de centrage qui s'étend à partir de la surface de centrage vers l'extérieur,
- dans lequel les languettes de retenue (15, 16) sont reliées de manière mobile au corps de base (14) et par précontrainte élastique de façon que chaque languette de retenue
-- puisse être déplacée d'une première position, dans laquelle la surface de retenue (15b, 16b) dépasse dans un diamètre extérieur supérieur au diamètre nominal et la surface de centrage (15a, 16a) se trouve dans un diamètre extérieur qui est inférieur ou égal au diamètre nominal,
-- contre la force de précontrainte provoquée par la liaison en précontrainte élastique, jusqu'à une seconde position, dans laquelle la surface de retenue (15b, 16b) et la surface de centrage (15a, 16a) se trouvent dans un diamètre extérieur qui est inférieur au diamètre nominal,
**caractérisé en ce que** la douille de serrage (20) et la douille d'enfichage (10) sont reliées à l'aide d'une liaison filetée,
la douille de serrage présentant au niveau d'une seconde extrémité opposée à sa première extrémité un filet intérieur, avec lequel coagit un filet extérieur (112) de la douille d'enfichage.

2. Presse-étoupe selon le préambule de la revendication 1,
**caractérisé en ce que** plusieurs languettes de retenue réparties uniformément sur la périphérie sont agencées au niveau de la douille d'enfichage et, entre respectivement deux languettes de retenue, il est formé rigidement une section de périphérie sur laquelle est réalisée une partie périphérique de filet intérieur, les parties périphériques de filet intérieur des sections de périphérie rigides ayant une fonction de filet intérieur dans lequel s'engage un filet extérieur de la douille de serrage.

3. Presse-étoupe selon le préambule de la revendication 1 ou 2,
**caractérisé en ce que** la douille de serrage (20) et l'élément de serrage (30) sont reliés à l'aide d'une liaison filetée, la douille de serrage présentant en particulier au niveau d'une première extrémité un filet extérieur, avec lequel coagit un filet intérieur de l'élément de serrage.

4. Presse-étoupe selon l'une quelconque des revendications précédentes,
**caractérisé en ce que** la douille de serrage présente une partie d'actionnement par un outil pour l'application d'un couple, formée de préférence d'un seul tenant avec la douille de serrage, en particulier une section à six pans extérieurs.

5. Presse-étoupe selon l'une quelconque des revendications précédentes,
**caractérisé en ce que** trois languettes de retenue (15, 16, 17) réparties uniformément sur la périphérie sont agencées au niveau de la douille de serrage.

6. Presse-étoupe selon l'une quelconque des revendications précédentes,
**caractérisé en ce que** des sections de périphérie cylindrique sont réalisées au niveau de la douille d'enfichage entre les languettes de retenue, dont le diamètre extérieur est inférieur ou égal au diamètre nominal.

7. Presse-étoupe selon l'une quelconque des revendications précédentes,
**caractérisé en ce qu'**une partie d'actionnement par un outil réalisée pour la transmission de couple autour de l'axe longitudinal du presse-étoupe est réalisée au niveau de l'élément de serrage, de préférence une section à six pans extérieurs.

8. Presse-étoupe selon l'une quelconque des revendications précédentes,
**caractérisé en ce que** une partie d'actionnement par un outil réalisée pour la transmission de couple autour de l'axe longitudinal du presse-étoupe est réalisée respectivement au niveau de l'élément de serrage et de la douille de serrage, de préférence respectivement une section à six pans extérieurs.

9. Douille d'enfichage (10) comprenant
- un corps de base (14) qui présente une surface extérieure, dont le diamètre extérieur ne dépasse pas un diamètre nominal,
- au moins deux languettes de retenue (15, 16, 17) réparties sur la périphérie de la surface extérieure du corps de base avec respectivement une première surface de centrage (15a, 16a) et une surface de retenue (15b, 16b) coudée contiguë à la première surface de centrage qui s'étend à partir de la surface de centrage vers l'extérieur,
- dans laquelle les languettes de retenue sont reliées de manière mobile au corps de base et par précontrainte élastique de façon que chaque languette de retenue
-- puisse être déplacée d'une première position, dans laquelle la surface de retenue dépasse dans un diamètre extérieur supérieur au diamètre nominal et la surface de centrage se trouve dans un diamètre extérieur qui est inférieur ou égal au diamètre nominal,
-- contre la force de précontrainte provoquée par la liaison en précontrainte élastique, jusque dans une seconde position, dans laquelle la surface de retenue et la surface de centrage se trouvent dans un diamètre extérieur qui est inférieur au diamètre nominal,
**caractérisée en ce que** les languettes de retenue sont réparties uniformément au niveau de la douille d'enfichage sur la périphérie et il est formé entre respectivement deux languettes de retenue une section de périphérie réalisée rigide, sur laquelle une partie périphérique de filet intérieur (12) est réalisée, les parties périphériques de filet intérieur des sections de périphérie réalisées rigides ayant une fonction de filet intérieur.

10. Douille d'enfichage selon la revendication précédente 9,
**caractérisée en ce que** trois languettes de retenue (15, 16, 17) réparties uniformément au niveau de la périphérie sont agencées au niveau de la douille d'enfichage.

11. Douille d'enfichage selon la revendication précédente 9 ou 10,
**caractérisée en ce que** des sections de périphérie cylindrique sont réalisées au niveau de la douille d'enfichage entre les languettes de retenue, dont le diamètre extérieur est inférieur ou égal au diamètre nominal.

12. Douille d'enfichage selon l'une quelconque des revendications précédentes 9 à 11,
**caractérisée en ce que** les languettes de retenue (15, 16, 17) sont précontraintes élastiquement vers l'extérieur radialement pour la génération d'une force de friction agissant sur la périphérie dans un perçage de boîtier avec le diamètre nominal qui agit contre la force de montage entre la douille de serrage et la douille d'enfichage, en particulier un vissage résultant.
